**Europäisches Patentamt**

**European Patent Office**

**Office européen des brevets**

(19)

(11) Veröffentlichungsnummer: **0 319 741 B1**

(12) # EUROPÄISCHE PATENTSCHRIFT

(45) Veröffentlichungstag der Patentschrift :
**14.08.91 Patentblatt 91/33**

(51) Int. Cl.⁵ : **H01M 2/06**

(21) Anmeldenummer : **88118931.0**

(22) Anmeldetag : **14.11.88**

(54) **Poldurchführung.**

(30) Priorität : **11.12.87 DE 8716389 U**

(43) Veröffentlichungstag der Anmeldung :
**14.06.89 Patentblatt 89/24**

(45) Bekanntmachung des Hinweises auf die
Patenterteilung :
**14.08.91 Patentblatt 91/33**

(84) Benannte Vertragsstaaten :
**AT BE DE ES FR GB IT SE**

(56) Entgegenhaltungen :
**DE-C- 3 230 628**
**DE-U- 8 716 389**
**US-A- 1 599 836**

(73) Patentinhaber : **VARTA Batterie**
**Aktiengesellschaft**
**Am Leineufer 51**
**W-3000 Hannover 21 (DE)**

(72) Erfinder : **Falk, Klaus-Martin**
**Pappelstrasse 36**
**W-5800 Hagen 1 (DE)**

(74) Vertreter : **Kaiser, Dieter Ralf, Dipl.-Ing.**
**Gundelhardtstrasse 72**
**W-6233 Kelkheim/Ts. (DE)**

**Beschreibung**

Die Neuerung betrifft eine Poldurchführung für eine elektrische Akkumulatorenzelle, insbesondere eine Bleiakkumulatorenzelle, deren Kunststoffdeckel eine tubusförmige Öffnung besitzt, durch welche ein Polschaft unter Zwischenlage einer Hülse aus Kunststoff abgedichtet hindurchführbar ist.

Poldurchführungen haben die Aufgabe, einen Zellenpol in der Durchgangsöffnung durch den Gehäusedeckel sicher zu fixieren und den Polschaft so gegen den Zellendeckel abzudichten, daß ein Austreten von Elektrolyt verhindert wird. Auf relativ zuverlässige Weise kann dies durch eine tubusförmige Gestaltung der Deckelöffnung geschehen, indem das untere Tubusende, z.B. über einen Ringflansch, gegen den Polschaft abgedichtet und der überstehende Ringspalt zwischen Pol und Tubus mit einer Vergußmasse ausgefüllt wird.

Die Vergußmethode ist jedoch umständlich, und die starre Verbindung mit dem Deckel ermöglicht dem Pol kein Bewegungsspiel in axialer Richtung, welches insbesondere dem positiven Pol durch das Gitterwachstum der Platten als Folge fortschreitender Korrosion aufgezwungen wird.

Bei neueren Poldurchführungen ist anstelle der Vergußmasse eine Dichtmanschette in Form einer zwischenliegenden Kunststoffhülse vorgesehen, die z.B. gemäß GM 8534580 als individuelles Spritzteil dem im Durchführungsbereich verjüngten Polabschnitt aufgeschraubt wird. Außer einer präzisen Schraubführung verlangt diese Konstruktion jedoch zusätzliche Dichtungselemente in Form von O-Ringen, von denen einer in einer umlaufenden Nut der Hülse gehalten werden muß und mit dem die Hülse in aufgeschraubter Position elastisch gegen den Ringflansch des Deckeltubus drückt, während ein weiterer O-Ring dafür sorgt, daß auch zwischen der durch die Polverjüngung gebildeten Polschulter und dem Ringflansch eine sichere Elektrolytabdichtung, durch welche Pol und Deckel unmittelbar gegeneinander abgedichtet sind, besteht. Für den Fall eines Versagens dieser Dichtungen verhindert ein dritter O-Ring zwischen dem oberen Hülsenrand und einem aufliegenden Zellenverbinder den Korrosionsangriff durch Säureelektrolyt, der oberhalb des Deckels austritt, auf das am Pol befestigte, entisolierte Verbindungskabel.

Die Verwendung mehrerer Dichtungsringe und deren Montage an verschiedenen Stellen der miteinander zu verbindenden Zellenbauteile macht die Fertigung sehr zeitaufwendig und vom Materialeinsatz her gesehen unwirtschaftlich.

Der Neuerung liegt daher die Aufgabe zugrunde, eine Poldurchführung mit zwischenliegender Kunststoffhülse zwischen Pol und Deckeltubus anzugeben, die eine rasche Montage begünstigt und ohne komplizierte Maßnahmen den Zellendeckel elektrolytdicht am Pol fixiert.

Die Aufgabe wird neuerungsgemäß mit den im kennzeichnenden Teil des Anspruchs 1 angegebenen Mitteln gelöst.

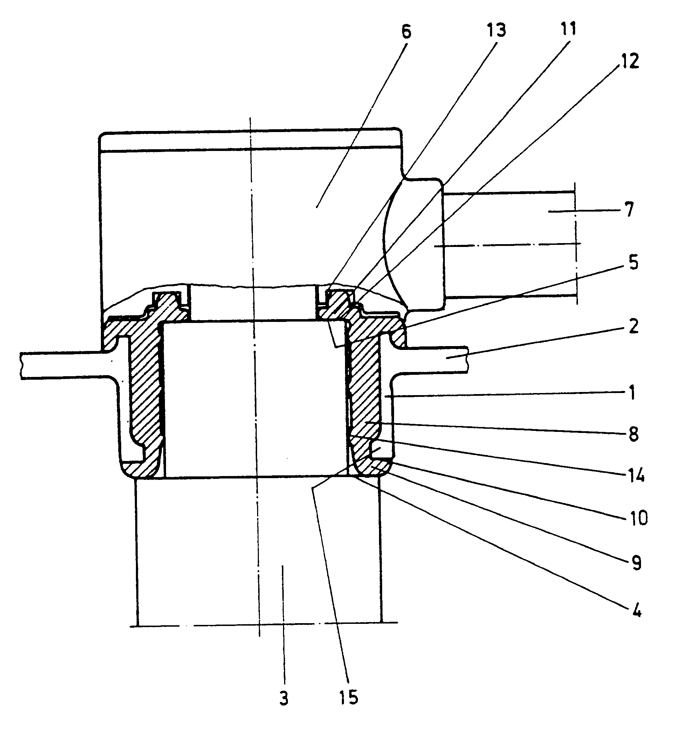

Anhand der Figur wird die Neuerung näher erläutert.

Durch den Deckeltubus 1 des Zellendeckels 2 hindurch erstreckt sich der Zellenpol 3, welcher im Durchführungsbereich durch den Tubus im Durchmesser verjüngt und oberhalb des Deckels nochmals verjüngt ist, so daß sich zwei Polschultern 4 und 5 ergeben. An den obersten Polabschnitt, durch die Kunststoffumspritzung 6 verdeckt, ist das Verbinderkabel 7 angeschlossen. Den Ringspalt zwischen Pol und Deckeltubus füllt die Kunststoffhülse 8 aus, deren unteres Ende mit einer flanschartigen, auswärts gerichteten Anformung 9 abschließt, die mit einer gewölbten Unterseite auf der unteren Polschulter 4 aufsitzt, während sie mit einer flachen Oberseite 10 an der unteren Stirnkante des Deckeltubus 1 anliegt. Ein zweiter, jedoch einwärts gerichteter Ringflansch 11 ist dem oberen Ende der Hülse 8 angeformt. Dieser Ringflansch liegt mit einer flachen Unterseite 12 auf der oberen Polschulter 5 auf, während seine Oberseite stark aufgewölbt und im Profil einer Ringdichtung nachgebildet ist.

Durch die neuerungsgemäße Gestaltung der beiden Ringflansche werden zumindest zwei O-Ringe eingespart, die als zusätzliche Dichtungselemente bei einer bekannten Poldurchführung zum Abdichten des Poles gegen den Deckel bzw. Deckeltubus einerseits und zum Abdichten des Poles gegen den Verbinder andererseits benötigt würden.

Beim Anziehen der Polschraube (durch die Kunststoffumspritzung 6 verdeckt) werden die Ringflansche mit ihren gewölbten Außenkonturen gegen die untere Polschulter 4 bzw. gegen die umlaufende Ringnut 13 gepreßt und dabei insbesondere an den flachen Seiten 10, 12 der Ringflansche, welche als eigentliche Dichtflächen zwischen Pol und Deckel bzw. zwischen Pol und Verbinder fungieren, eine wirksame Abdichtung erzeugt. Darüber hinaus stehen Pol und Hülse durch an die Innenwand der Hülse angespritzte Dichtlippen 14 zueinander in einem reibschlüssigen Kontakt.

Im Hinblick auf ihre Dichtungsfunktion ist die neuerungsgemäße Hülse aus einem vergleichsweise weicheren, elastischeren Kunststoffmaterial als der Deckel hergestellt. Besonders geeignet sind Synthesekautschuke aus der Gruppe der thermoplastischen Elastomere, darunter das cis-1,4-Polyisopren, cis-1,4-Polybutadien, Styrol-Butadien-Kautschuk oder Silikonkautschuk. Ebenso brauchbar ist ein modifiziertes Polyolefin.

In einer besonders vorteilhaften Ausführungsform der Neuerung ist die Kunststoffhülse der Innenwand der tubusförmigen Deckelöffnung angespritzt, die gegebenenfalls auch konisch ausgebildet sein kann, wobei es günstig ist, wie in der Figur dargestellt, die untere Stirnkante des Deckeltubus durch eine flanschartige Randverdickung 15 zu verbreitern und dadurch eine größere Dichtungsfläche 10 zu schaffen. Ebenso kann die obere Stirnkante des Deckeltubus in die Anspritzung mit einbezogen werden, womit ein bündiger Übergang zur Kunststoffumspritzung 6 des Verbinders erreicht wird. Mit angespritzter neuerungsgemäßer Hülse ist der Zellendeckel in einem einzigen Arbeitsschritt auf den Pol fertig montiert.

In einer anderen bevorzugten Ausführungsform ist die neuerungsgemäße Hülse mit den Ringflanschen ein unabhängiges, einstückiges Spritzteil und wird dem Pol vor der Montage des Deckels als individuelles Bauteil aufgesteckt. Danach folgen die Befestigung des Verbinders mittels Polschuh am Polkopf und die Dichtungspressung über das Anziehen der Polschraube.

Die neuerungsgemäße Hülse als Poldurchführung in hohem Maße montagefreundlich. Sie gewährleistet eine sichere Abdichtung gegen Elektrolytaustritt ohne gesonderten Einsatz von Ringdichtungen und erschwert über zusätzliche Dichtflächen ein Elektrolytkriechen aus dem Zellinnern nach draußen und zum Verbinder.

## Patentansprüche

1. Poldurchführung für eine elektrische Akkumulatorenzelle, insbesondere eine Bleiakkumulatorenzelle, deren Kunststoffdeckel eine tubusförmige Öffnung besitzt, durch welche ein Polschaft unter Zwischenlage einer Hülse aus Kunststoff abgedichtet hindurchführbar ist, dadurch gekennzeichnet, daß das untere Ende der Hülse (8) zu einem auswärts gerichteten Ringflansch (9) ausgeformt ist, dessen gewölbte, einer O-Ringdichtung nachgebildete Unterseite sich auf einer unteren Polschulter (4) abstützt, während die flache Oberseite (10) des Ringflansches an der unteren Stirnkante des Deckeltubus (1) dichtend anliegt, und daß das obere Ende der Hülse (8) zu einem einwärts gerichteten Ringflansch (11) ausgeformt ist, der mit einer flachen Unterseite (12) eine obere Polschulter (5) dichtend übergreift, während die Oberseite dieses Ringflansches zum Zwecke einer Abdichtung des Poles gegen den aufliegenden Zellenverbinder (7) dem Wölbungsprofil einer O-Ringdichtung nachgestaltet ist.

2. Poldurchführung nach Anspruch 1, dadurch gekennzeichnet, daß die Kunststoffhülse (8, 9, 11) der tubusförmigen Öffnung (1) angespritzt ist.

3. Poldurchführung nach Anspruch 1, dadurch gekennzeichnet, daß die Kunststoffhülse (8, 9, 11) als individuelles Spritzteil in die tubusförmige Deckelöffnung (1) einsteckbar ist.

4. Poldurchführung nach den Ansprüchen 2 oder 3, dadurch gekennzeichnet, daß der Innenwand der Kunststoffhülse umlaufende Dichtlippen (14) angeformt sind.

5. Poldurchführung nach Anspruch 4, dadurch gekennzeichnet, daß die untere Stirnkante des Deckeltubus durch eine flanschartige Wandverdickung (15) verbreitert ist.

6. Poldurchführung nach Anspruch 2, dadurch gekennzeichnet, daß die obere Stirnkante des Deckeltubus in die Hülsen-Anspritzung integriert ist.

## Claims

1. Terminal feedthrough for an electrical storage-battery cell, in particular a lead-acid battery cell, whose plastic cover has a tubular opening through which a terminal shaft can be lead in a sealed fashion with the interposition of a plastic sleeve, characterised in that the lower end of the sleeve (8) is formed into an outwardly directed annular flange (9) whose cambered underside, which resembles an O-ring seal, is supported on a lower terminal shoulder (4), while the flat topside (10) of the annular flange bears sealingly on the lower end edge of the cover tube (1), and in that the upper end of the sleeve (8) is formed into an inwardly directed annular flange (11), which overlaps an upper terminal shoulder (5) sealingly with a flat underside (12), while for the purpose of sealing the terminal against the intercell connector (7) resting on top, the topside of said annular flange is configured to resemble the camber profile of an O-ring seal.

2. Terminal feedthrough according to Claim 1, characterised in that the plastic sleeve (8, 9, 11) is injection-moulded onto the tubular opening (1).

3. Terminal feedthrough according to Claim 1, characterised in that the plastic sleeve (8, 9, 11) can be inserted as an individual injection-moulded part into the tubular cover opening (1).

4. Terminal feedthrough according to Claims 2 or 3, characterised in that circumferential sealing lips (14) are integrally formed on the inner wall of the plastic sleeve.

5. Terminal feedthrough according to Claim 4, characterised in that the lower end edge of the cover tube is widened by means of a flange-like wall thick spot (15).

6. Terminal feedthrough according to Claim 2, characterised in that the upper end edge of the cover tube is integrated into the sleeve injection moulding.

## Revendications

1. Traversée de borne pour un élément d'accumulateur électrique, notamment un élément d'accumulateur au plomb, dont le couvercle en matière plastique comporte un orifice en forme de tube, à travers lequel peut passer un fil borne étanché par interposition d'une douille en matière plastique, traversée de borne caractérisée en ce que l'extrémité inférieure de la douille (8) est conformée en une collerette annulaire (9) dirigée vers l'extérieur, et dont la face inférieure bombée, revêtant la forme d'un joint d'étanchéité annulaire torique, prend appui sur un épaulement inférieur (4) de la borne, tandis que la face supérieure plane (10) de la bride annulaire s'applique de façon étanche contre le bord frontal inférieur du tube (1) du couvercle, et en ce que l'extrémité supérieure de la douille (8) est conformée en une collerette annulaire (11) dirigée vers l'intérieur, qui, avec une face inférieure plane (12) vient en prise de façon étanche sur un épaulement supérieur (5) de la borne, tandis que la face supérieure de cette bride annulaire, pour permettre un étanchement de la borne par rapport à la connexion de l'élément (7) placé sur elle, est réalisée avec le profil bombé d'un joint d'étanchéité annulaire torique.

2. Traversée de borne selon la revendication 1, caractérisée en ce que la douille en matière plastique (8, 9, 11) est moulée contre l'orifice (1) en forme de tube.

3. Traversée de borne selon la revendication 1, caractérisée en ce que la douille en matière plastique (8, 9, 11) est susceptible d'être emboîtée en tant que pièce moulée individuelle dans l'orifice en forme de tube (1) du couvercle.

4. Traversée de borne selon la revendication 2 ou la revendication 3, caractérisée en ce que des lèvres d'étanchéité périphériques (14) sont moulées sur la paroi interne de la douille en matière plastique.

5. Traversée de borne selon la revendication 4, caractérisée en ce que le bord frontal inférieur du tube du couvercle est élargi par un épaississement en forme de collerette (15) de la paroi.

6. Traversée de borne selon la revendication 2, caractérisée en ce que le bord frontal supérieur du tube du couvercle est intégré dans le moulage de la douille.